Europäisches Patentamt

European Patent Office

Office européen des brevets

(19)

(11) Veröffentlichungsnummer: **0 269 135**
**B1**

(12) EUROPÄISCHE PATENTSCHRIFT

(45) Veröffentlichungstag der Patentschrift:
**17.10.90**

(51) Int. Cl.⁵: **F16J 1/16**

(21) Anmeldenummer: **87201849.4**

(22) Anmeldetag: **26.09.87**

(54) Kolbenbolzen.

(30) Priorität: **30.10.86 DE 3636913**

(43) Veröffentlichungstag der Anmeldung:
**01.06.88 Patentblatt 88/22**

(45) Bekanntmachung des Hinweises auf die Patenterteilung:
**17.10.90 Patentblatt 90/42**

(84) Benannte Vertragsstaaten:
**DE FR**

(56) Entgegenhaltungen:
**DE-A- 1 946 403**

(73) Patentinhaber: **KOLBENSCHMIDT Aktiengesellschaft,
Karl-Schmidt-Strasse 8/12 Postfach 1351,
D-7107 Neckarsulm(DE)**

(72) Erfinder: **Mielke, Siegfried, Dr., Leipziger Strasse 111,
D-7107 Neckarsulm(DE)**

(74) Vertreter: **Rieger, Harald, Dr., Reuterweg 14,
D-6000 Frankfurt a.M.(DE)**

## Beschreibung

Die Erfindung betrifft einen Kolbenbolzen für Kolben von Hubkolbenmaschinen, insbesondere von Brennkraftmaschinen, mit doppel-T-förmigem Querschnitt, auf dessen durch einen Steg verbundenen Flanschen der Kolben mit den Naben der Bolzenaugen und ggf. mit dem Kolbenboden aufliegt und dessen Flanschaußenflächen eine kreisbogenförmige Kontur von gleichem Radius aufweisen.

Ein wesentlicher Teil der Entwicklungsarbeiten, insbesondere bei Brennkraftmaschinen, befaßt sich mit dem kompakten Kolben, der mit geringst möglichem Gewicht in der Lage ist, die heutigen hohen Motorleistungen von beispielsweise 65 PS/l ohne Abstriche bei Ölverbrauch und Gasdurchlaß sowie unter Berücksichtigung der gestiegenen Anforderungen an die mechanische Laufruhe, insbesondere in kaltem Zustand, zu übertragen. Da die Kolbenbolzen nicht unerheblich zu den oszillierenden Massen des Triebwerkes beitragen, hat die Fachwelt gewichtsreduzierte Alternativen in Form von kohlefaserverstärkten Stahl-, Kunststoff-, Verbund- und Keramik-Kolbenbolzen entwickelt, wodurch eine Gewichtsersparnis von bis zu 25% bzw. 40% gegenüber einem herkömmlichen, aus Stahl bestehenden Kolbenbolzen erreicht wird. Die Kolbenbolzen sind für einen Zünddruck von PZ= 60 bar dauerfest, ihre Fertigung ist jedoch verglichen mit derjenigen der üblichen Stahl-Kolbenbolzen vergleichsweise aufwendig, so daß ihr Einsatz derzeit nur für Sonderanwendungen in Betracht kommt. Aus der DE-OS 1 946 403 ist ein Kolbenbolzen mit einer oberen und einer unteren konvex gekrümmten Fläche, die durch konkav gekrümmte Flächen miteinander verbunden sind, bekannt. Da dieser Kolbenbolzen einen vollen Querschnitt aufweist, ist sein Gewicht relativ groß. In der DE-OS 3 331 300 ist ein im Querschnitt doppel-T-förmiger Kolbenbolzen mit eine kreisbogenförmige Kontur gleichen Durchmessers aufweisenden Flanschaußenflächen beschrieben, der für alle Pleuelarten einsetzbar ist und gegenüber einem Stahl-Kolbenbolzen eine Gewichtseinsparung von etwa 20% ohne wesentlichen Mehraufwand ermöglicht.

Aufgabe der vorliegenden Erfindung ist es, eine weitere Gewichtseinsparung ohne Beeinträchtigung der Dauerfestigkeit bei dem eingangs beschriebenen Kolbenbolzen zu erzielen.

Die Lösung dieser Aufgabe besteht darin, daß die Flanschaußenfläche des in der Breite kleineren Flansches nach beiden Seiten hin mit gebrochenen oder verrundeten Kanten in parallel zur Lastebene verlaufende Flächen übergeht. Durch die kleinere Breite des pleuelseitigen Flansches ergibt sich eine geringere Beanspruchung dieses Flansches durch die vom Kolben, Kolbenringen und Kolbenbolzen erzeugten Massenkräfte.

Bei einem mit den Naben der Bolzenaugen und ganz oder teilweise mit dem Boden auf den Flanschen des im Querschnitt doppel-T-förmigen Kolbenbolzens aufliegenden Kolben wird die der Erfindung zugrundeliegende Aufgabe dadurch gelöst, daß die Breite des kolbenbodenseitigen Flansches 5 bis 35% kleiner als die Breite und/oder seine Höhe in der Lastebene 5 bis 40% kleiner als die Höhe jeweils bezogen auf den pleuelseitigen Flansch ist und die Flanschaußenfläche des in der Breite kleineren Flansches nach beiden Seiten hin mit gebrochenen oder verrundeten Kanten in parallel zur Lastebene verlaufende Flächen übergeht, ohne daß die zulässige Flächenpressung überschritten wird.

Da, bezogen auf die Lastebene, die Höhe des pleuelseitigen Flansches um 5 bis 40% kleiner als die Höhe des kolbenbodenseitigen Flansches in der Lastebene ausgebildet ist, ist die Herstellung des doppel-T-förmigen Kolbenbolzens in werkstoffgerechter Form möglich, wenn als Werkstoff Keramik, z.B. $Si_3N_4$, gewählt wird. Der aus Keramik gefertigte Kolbenbolzen ist gegenüber dem aus Stahl bestehenden Kolbenbolzen mit dreifach höheren Druckspannungen als Zugspannungen belastbar, so daß sich mit einem im Querschnitt kleineren pleuelseitigen Flansch ein Kolbenbolzen mit optimalem Gewicht ergibt.

In manchen Fällen ist es auch möglich, sowohl die Breite als auch die Höhe des Flansches zu verkleinern.

Im Hinblick auf die Aufgabenstellung ist es vorteilhaft, einen durch Strangpressen hergestellten doppel-T-förmigen Kolbenbolzen zu verwenden, da dabei die für die Dauerfestigkeit des Kolbenbolzens kritischen Einschlüsse im Stahl in eine in Beanspruchungsrichtung liegende längliche, die Festigkeit des Kolbenbolzens kaum beeinträchtigende Gestalt gebracht werden.

Im Rahmen der vorzugsweisen Ausbildung des Kolbenbolzens, dessen pleuelseitiger Flansch von dem gabelhakenförmigen Ende des Pleuels klauenartig und formschlüssig umgriffen ist, sind die Innenflächen des gabelhakenförmigen Endes des Pleuels in den Übergangsbereichen zwischen den gabel- und den hakenförmigen Abschnitten mit einem Radius von größer 2 bis 20 mm verrundet. Die vergleichsweise kleinere Flanschbreite bedingt einen entsprechend kürzeren Hebelarm und damit geringere Biegespannungen in den Übergangsbereichen zwischen dem gabel- und hakenförmigen Abschnitt des gabelhakenförmigen Endes des Pleuels, so daß eine Überbeanspruchung des Pleuels vermieden wird.

Nach einem besonderen Erfindungsmerkmal sind die verrundeten Innenflächen, z.B. durch Rollen oder Kugelstrahlen, kaltverfestigt oder gehärtet. Dadurch ergibt sich eine Kolben-Kolbenbolzen-Pleuel-Anordnung, die auch bei sehr hohen Drehzahlen von z.B. größer 6 500 min⁻¹ problemlos betrieben werden kann.

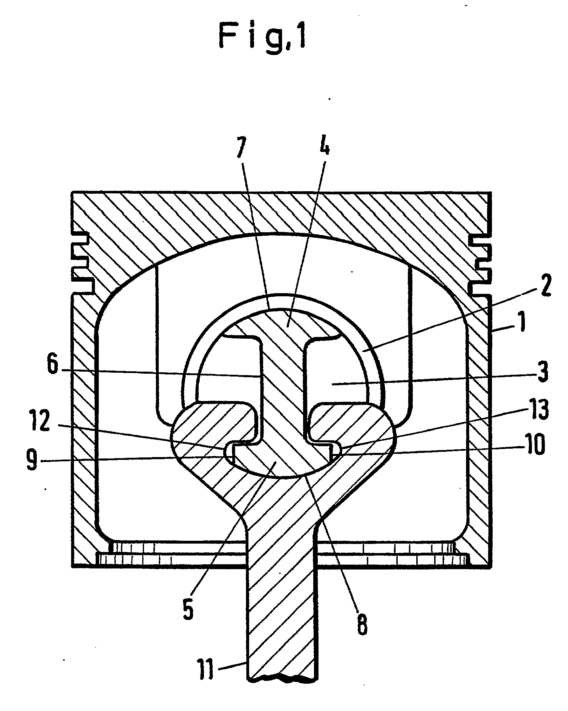

Die in den Zeichnungen beispielhaft wiedergegebenen Kolben-Kolbenbolzen-Pleuel-Anordnungen zeigen in Fig. 1 einen Längsschnitt entlang der die Kolbenachse und die senkrecht zur Bolzenachse stehende Achse einschließende Ebene. Der Kolben (1) liegt mit den Naben (2) der Bolzenaugen (3) auf den Flanschen (4, 5) des im Querschnitt doppel-T-förmigen Kolbenbolzens (6) auf. Die Außenflächen (7, 8) der Flansche (4, 5) besitzen eine kreisbogenförmige Kontur von gleichem Radius. Der pleuelseitige Flansch (5) weist eine Breite auf, die, verglichen mit der Breite des kolbenbodenseitigen Flansches (4), um ca. 20% kleiner ist und dessen Außenfläche (8) nach beiden Seiten hin in parallel zur Lastebene verlaufende Flächen (9, 10) übergeht. Die Innenflächen des den pleuelseitigen Flansch (5) klauenartig umgreifenden gabelhakenförmigen Endes des Pleuels (11) sind in den Übergangsbereichen (12, 13) zwischen den gabel- und den hakenförmigen Abschnitten mit einem Radius von 5 mm verrundet. Die hakenförmigen Abschnitte besitzen einen vergleichsweise kurzen Hebelarm.

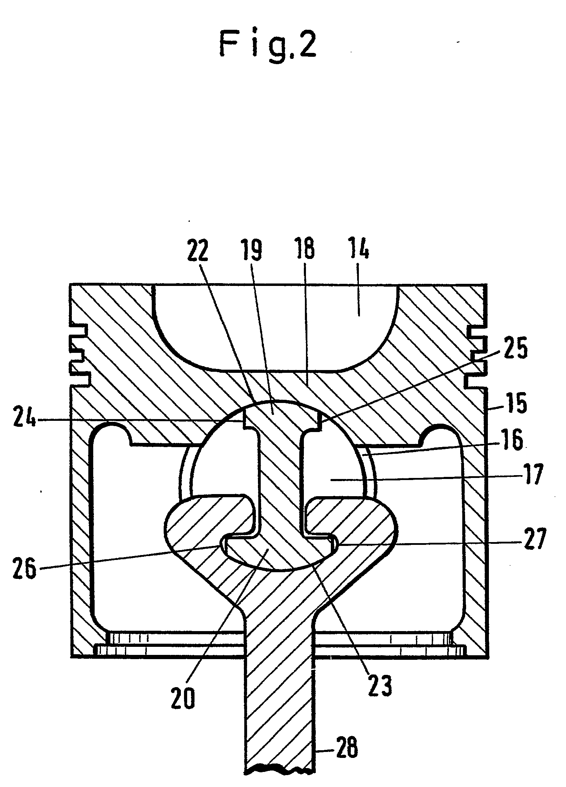

In Fig. 2 ist in einem entlang der die Achse senkrecht zur Bolzenrichtung und die Kolbenachse einschließenden Ebene geführten Längsschnitt eine Kolben-Kolbenbolzen-Pleuel-Anordnung wiedergegeben, bei der der mit einer Brennraummulde (14) ausgestattete Kolben (15) mit den Naben (16) der Bolzenaugen (17) und dem Kolbenboden (18) auf den Flanschen (19, 20) des im Querschnitt doppel-T-förmigen Kolbenbolzens (21) aufliegt. Die Außenflächen (22, 23) der Flansche (19, 20) sind kreisbogenförmig mit gleichem Radius gestaltet. Der kolbenbodenseitige Flansch (19) besitzt gegenüber dem pleuelseitigen Flansch (20) eine um ca. 25% kleinere Breite und seine Außenfläche (22) geht nach beiden Seiten hin in parallel zur Lastebene verlaufende Flächen (24, 25) über. Die gegenüber den Längsstirnseiten des pleuelseitigen Flansches (20) verlaufenden Innenflächen der Übergangsbereiche (26, 27) zwischen den gabel- und den hakenförmigen Abschnitten des gabelhakenförmigen Endes des Pleuels (28) sind mit einem Radius von 2,8 mm verrundet.

## Patentansprüche

1. Kolbenbolzen (6) für Kolben (1) von Hubkolbenmaschinen, insbesondere von Brennkraftmaschinen, mit doppel-T-förmigem Querschnitt, auf dessen durch einen Steg verbundenen Flanschen (4, 5) der Kolben mit den Naben (2) der Bolzenaugen (3) aufliegt und dessen Flanschaußenflächen (7, 8) eine kreisbogenförmige Kontur von gleichem Radius aufweisen, wobei die Breite des pleuelseitigen Flansches (5) 5 bis 35% kleiner als die Breite und/oder seine Höhe in der Lastebene 5 bis 40% kleiner als die Höhe jeweils bezogen auf den kolbenbodenseitigen Flansch (4) ist, dadurch gekennzeichnet, daß die Flanschaußenfläche (8) des in der Breite kleineren Flansches (5) nach beiden Seiten hin mit gebrochenen oder verrundeten Kanten in parallel zur Lastebene verlaufende Flächen (9, 10) übergeht.

2. Kolbenbolzen (21) für Kolben (15) von Hubkolbenmaschinen, insbesondere von Brennkraftmaschinen, mit doppel-T-förmigem Querschnitt, auf dessen durch einen Steg verbundenen Flanschen (19, 20) der Kolben mit den Naben (16) der Bolzenaugen (17) und mit dem Boden (18) aufliegt und dessen Flanschaußenflächen (22, 23) eine kreisbogenförmige Kontur von gleichem Radius aufweisen, dadurch gekennzeichnet, daß die Breite des kolbenbodenseitigen Flansches (19) 5 bis 35% kleiner als die Breite und/oder seine Höhe in der Lastebene 5 bis 40 % kleiner als die Höhe jeweils bezogen auf den pleuelseitigen Flansch (20) ist und die Flanschauβenfläche (22) des in der Breite kleineren Flansches (19) nach beiden Seiten hin mit gebrochenen oder verrundeten Kanten in parallel zur Lastebene verlaufende Flächen (24, 25) übergeht.

3. Kolbenbolzen nach den Ansprüchen 1 oder 2, gekennzeichnet durch einen durch Strangpressen hergestellten doppel-T-förmigen Kolbenbolzen (6, 21).

4. Kolbenbolzen nach den Ansprüchen 1 bis 3, dadurch gekennzeichnet, daß der pleuelseitige Flansch (5, 20) von dem gabelhakenförmigen Ende des Pleuels (11, 28) klauenartig und formschlüssig umgriffen ist und die Innenflächen des gabelhakenförmigen Endes des Pleuels in den Übergangsbereichen (12, 13, 26, 27) zwischen den gabel und den hakenförmigen Abschnitten mit einem Radius von größer 2 bis 20 mm verrundet sind.

5. Kolbenbolzen nach Anspruch 4, dadurch gekennzeichnet, daß die verrundeten Innenflächen kaltverfestigt oder gehärtet sind.

## Claims

1. A piston pin (6) for pistons (1) of reciprocating piston machines, particularly of internal combustin engines, which piston pin is double-T-shaped in cross-section and has flanges (4, 5), which are connected by a web and on which the piston rests with the bosses (2) of the pin eyes (3), wherein the outside surfaces (7, 8) of the flanges have a contour having the shape of an arc of a circle having the same radius, wherein the width of that flange (5) which is adjacent to the connecting rod is smaller by 5 to 15% than the width, and/or its height in the load plane is 5 to 40% smaller than the height, in each case of that flange (4) which is adjacent to the piston head, characterized in that the outside surface (8) of that flange (5) which has the smaller width merges towards both sides with broken or rounded edges into surfaces (9, 10) which are parallel to the load plane.

2. A piston pin (21) for pistons (15) of reciprocating piston machines, particularly of internal combustion engines, which piston pin is double-T-shaped in cross-section and has flanges (19, 20), which are connected by a web and on which the piston rests with the bosses (16) of the pin eyes (17), wherein the outside surfaces (22, 23) of the flanges have a contour having the shape of an arc of a circle having the same radius, characterized in that the width of that flange (19) which is adjacent to the piston head is smaller by 5 to 35% than the width, and/or its height in the load plane is smaller by 5 to 40% than the height, in each case of that flange (20) which is adjacent to the connecting rod, and of that flange (19) which has the smaller width merges towards both sides with broken or rounded edges into surfaces (24, 25) which are parallel to the load plane.

3. A piston according to claims 1 to 2, characterized by a double-T-shaped piston pin (6, 21) which has been made by extruding.

4. A piston pin according to claims 1 to 3, characterized in that that flange (5, 20) which is adjacent to the connecting rod is positively embraced by a claw by the fork-and hook-shaped end of the connecting rod (11, 28) and the inside surfaces of the fork- and hook-shaped end of the connecting rod are rounded with a radius between larger than 2 mm and 20 mm in the transitional portions (12, 13, 26, 27) between the fork-shaped and the hook-shaped portions.

5. A piston pin according to claim 4, characterized in that the rounded inside surfaces are cold-hardened or hardened.

## Revendications

1. Axe de piston (6) pour des pistons de moteurs à pistons à mouvements alternatifs, notamment de moteurs à combustion interne, ayant une section transversale en forme de double-T, sur les barres (4, 5) reliées par une âme duquel le piston s'applique par les moyeux (2) des alésages de l'axe du piston (3), et dont les surfaces extérieures des barres (7, 8) présentent un contour en forme d'arc-de-cercle de même rayon, la largeur de la barre (5) se trouvant du côté de la bielle étant plus petite de 5 à 35% et/ou sa hauteur dans le plan de charge étant plus petite de 5 à 40% que la largeur et/ou la hauteur respectivement de la barre (4) se trouvant du côté de la tête (4) du piston, caractérisé en ce que la surface extérieure (8) de la barre (5) la plus petite en largeur se transforme des deux côtés, en ayant des bords coupés ou arrondis, en des surfaces (9, 10) s'étendant parallèlement au plan de charge.

2. Axe de piston (21) pour des pistons (15) de moteurs à pistons à mouvements alternatifs, notamment des moteurs à combustion interne, ayant une section transversale en forme de double-T, sur les barres (19, 20) reliées par une âme duquel le piston s'applique par le moyeu (16) des alésages de l'axe du piston (17) et par le sommet (18), et dont les surfaces extérieures des barres (22, 23) présentent un contour en forme d'arc-de-cercle de même rayon, caractérisé en ce que la largeur de la barre (19) du côté de la tête du piston est inférieure de 5 à 35% et/ou sa hauteur dans le plan de charge est inférieure de 5 à 40% à la largeur et/ou à la hauteur de la barre (20) du côté de la bielle, et la surface extérieure (22) de la barre (19) la plus petite en largeur se transforme, des deux côtés, en ayant des bords coupés ou arrondis, en des surfaces (24, 25) s'étendant parallèlement au plan de charge.

3. Axe de piston suivant les revendications 1 ou 2, caractérisé par un axe de piston (6, 21) en forme de double-T fabriqué par filetage à la presse.

4. Axe de piston suivant les revendications 1 à 3, caractérisé en ce que la barre (5, 20) du côté de la bielle est enserrée à la manière d'une griffe et par complémentarité de formes par l'extrémité en forme de crochet et de fourche de la bielle (11, 28), et les surfaces intérieures de l'extrémité en forme de crochet et de fourche de la bielle sont arrondies dans les régions de transition (12, 13, 26, 27) comprises entre les parties en forme de fourche et les parties en forme de crochet, en ayant un rayon de 2 à 20 mm.

5. Axe de piston suivant la revendication 4, caractérisé en ce que les surfaces intérieures arrondies sont écrouies ou trempées.

# Fig.1

# Fig.2